Europäisches Patentamt

European Patent Office

Office européen des brevets

(19)

(11) Veröffentlichungsnummer: **0 268 180**
**A2**

(12) **EUROPÄISCHE PATENTANMELDUNG**

(21) Anmeldenummer: 87116520.5

(22) Anmeldetag: 09.11.87

(51) Int. Cl.⁴: **G02B 6/36**

(30) Priorität: 12.11.86 DE 8630246 U

(43) Veröffentlichungstag der Anmeldung:
25.05.88 Patentblatt 88/21

(84) Benannte Vertragsstaaten:
AT BE CH DE ES FR GB GR IT LI LU NL SE

(71) Anmelder: **Siemens Aktiengesellschaft Berlin
und München**
**Wittelsbacherplatz 2**
**D-8000 München 2(DE)**

(72) Erfinder: **Bruch, Helmut, Dipl.-Ing.**
**Paewesiner Weg 33**
**D-1000 Berlin 20(DE)**

(54) **Vorrichtung zum Fixieren von Lichtwellenleiterkabeln in einem Steckergehäuse.**

(57) Die Vorrichtung besitzt in einem Gehäuse jeweils voneinander der unabhängige Abfangstationen für die einzelnen Elemente des Lichtwellenleiterkabels, wobei die Verbindung der einzelnen Elemente des Lichtwellenleiterkabels mit dem Stecker lösbar ist. Dazu werden die einzelnen Elemente gesondert mit Abfangteilen versehen und diese Abfangteile dann in die Abfangstation im Steckergehäuse eingelegt, ohne daß eine Deformation am Steckergehäuse vorgenommen wird.

FIG 9

EP 0 268 180 A2

## Vorrichtung zum Fixieren von Lichtwellenleiterkabeln in einem Steckergehäuse.

Die Erfindung bezieht sich auf eine Vorrichtung zum Fixieren von Lichtwellenleiterkabeln in einem Steckergehäuse, welches eine Durchtrittsöffnung zum Hindurchführen von mindestens einem Lichtwellenleiterkabel besitzt.

Zur Fixierung der einzelnen Komponenten, aus welchen ein Lichtwellenleiterkabel besteht, namentlich dem eigentlichen Lichtwellenleiter, die ihn umgebende Bewehrung aus Kevlar, sowie den Kabelmantel, sind zahlreiche Methoden bekannt.

Aus der US-PS 4 114 979 ist schon ein Verfahren zum Fixieren der Kevlarbewehrung und des Mantels am Steckergehäuse bekannt.

Ein Nachteil der bekannten Lösung besteht darin, daß sie im wesentlichen irreversibel ist.

Es hat sich nämlich in der Praxis gezeigt, daß es unter Umständen notwendig sein kann, die Verbindung zwischen Lichtwellenleiterkabel und dem Steckergehäuse wieder zu lösen.

Aufgabe der Erfindung ist es daher, eine Vorrichtung nach dem Oberbegriff zu schaffen, die es möglich macht, einerseits die Fixierung lösbar zu gestalten und andererseits bis zum Fixieren der einzelnen Elemente des Lichtwellenleiterkabels diese gesondert handhaben zu können.

Bei der Vorrichtung zum Fixieren von Lichtwellenleiterkabeln der eingangs genannten Gattung wird diese Aufgabe neuerungsgemäß durch die Merkmale des kennzeichnenden Teils von Anspruch 1 gelöst.

Vorteilhafte weitere Ausführungsformen der Erfindung sind in den Unteransprüchen angegeben.

Ein Ausführungsbeispiel der Erfindung wird nachstehend anhand von Zeichnungen beispielsweise erläutert.

Es zeigen:

Figuren 1, 2, und 3 in perspektivischer bzw. teilweise geschnittener Ansicht eine Klemmvorrichtung zum Abfangen von zwei faserförmigen Lichtwellenleitern;

Figuren 4 und 5 in Schrägansicht die beiden Teile einer kombinierten Wickel und Quetschvorrichtung zum Abfangen der Kevlarbewehrung eines Lichtwellenleiterkabels und

Figur 6 die in den Figuren 4 und 5 dargestellten Teile miteinander verbunden, in Seitenansicht;

Figur 7 eine hohlzylindrische Hülse und ein zugehöriges,im Ausschnitt gezeigtes Gehäuseteil, die zum Abfangen des Kabelmantels eines Lichtwellenleiters vorgesehen sind;

Figuren 8 und 9 teilweise geschnitten, in Aufsicht und Seitenansicht, die in den vorangegangenen Figuren 1 bis 7 dargestellten Teile in zusammengefügtem Zustand.

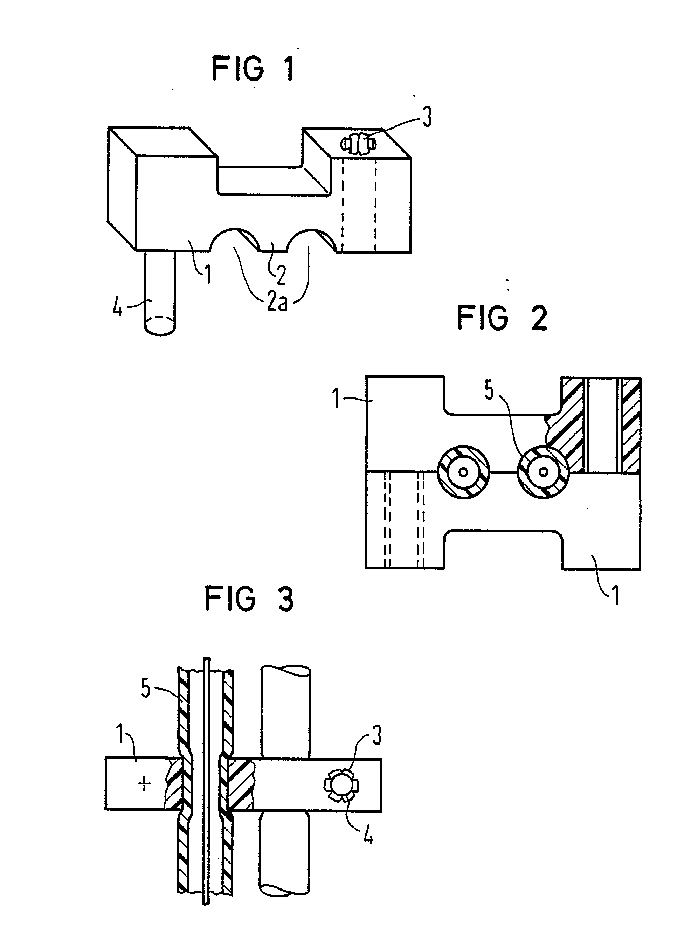

Wie aus den Figuren 1 bis 3 ersichtlich, besteht die Klemmvorrichtung aus zwei gleichen Klemmteilen 1, die jeweils einen mit Rillen 2a zur Aufnahme der faserförmigen Lichtwellenleiter 5 versehenen Quetschbalken 2, eine im Quetschbalken verlaufende, quer zu den Rillen 2a gerichtete Bohrung 3 und einen mit dem Quetschbalken einstückigen, zur Bohrung parallelen Stift 4 aufweisen. Die Klemmvorrichtung wird dadurch realisiert, daß der Stift 4 des einen Klemmteils 1 jeweils in die Bohrung 3 des anderen Klemmteils 1 gesteckt wird. Figur 2 zeigt teilweise geschnitten, in Frontansicht zwei so zusammengesteckte Klemmteile 1. Die halbkreisförmigen Rillen 2a im Quetschbalken 2 ergänzen sich zu Rohren in welchen die Lichtwellenleiter 5 eingeklemmt sind. Die Bohrung 3 ist dabei so bemessen, daß sich ein Preßsitz des Stiftes 4 in der Bohrung 3 ergibt.

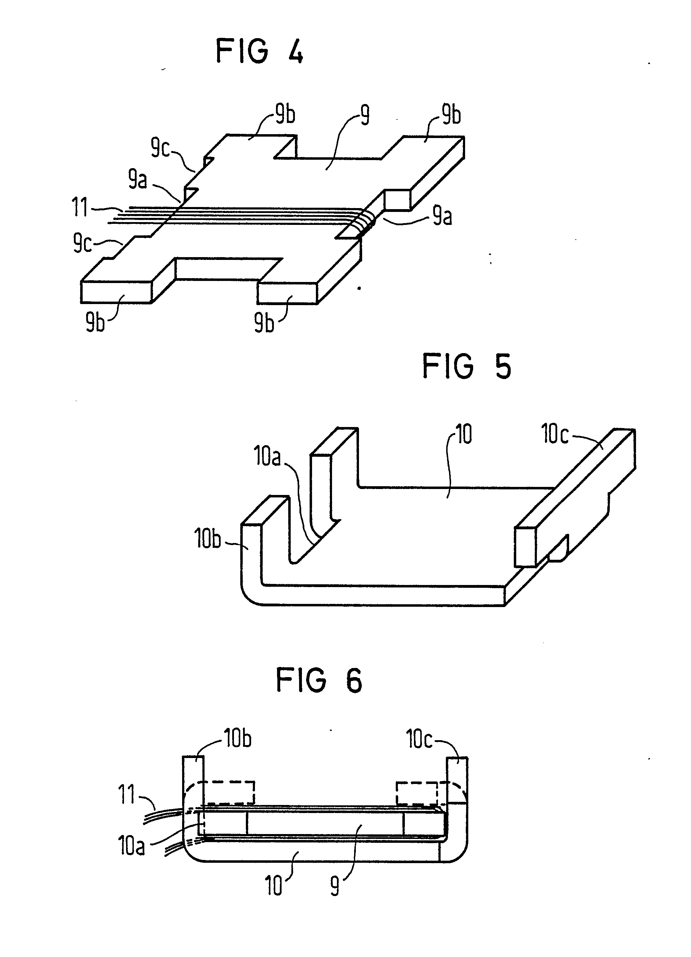

Die zweiteilige Wickel-und Quetschvorrichtung weist als erstes Teil ein in Fig.4 dargestelltes plattenförmiges Wickelblech 9 mit Ausnehmungen 9a, 9c und Lappen 9b auf.

Ein vom Kabelmantel freigelegter, zu einem Strang zusammengefasster Endabschnitt der Kevlarbewehrung 11 ist so um das Wickelblech 9 gelegt, daß er in den Ausnehmungen 9a verläuft. Die Ausnehmungen 9a verhindern vorteilhaft ein seitliches Verrutschen der Kevlarbewehrung 11.

Figur 5 zeigt als zweites Teil der Wickel-und Quetschvorrichtung ein Quetschelement 10 im Ausgangszustand. Die Breite des Quetschelements 10 ist so gewählt, daß es in der lichten Weite der Ausnehmungen 9c Platz findet. Das im wesentlichen aus einem flachen Blech bestehende Quetschelement 10 weist an einer Querseite zwei abgewinkelte Quetschlappen 10b auf, die in einem solchen Abstand voneinander vorgesehen sind, daß zwischen den Quetschlappen 10b eine Ausnehmung 10a entsteht, deren Querabmessung mit der der Ausnehmung 9a des Wickelblechs 9 in etwa übereinstimmt. An der gegenüberliegenden Seite ist ein Quetschlappen 10c vorgesehen, dessen Breite dem Abstand der beiden Quetschlappen 10b voneinander entspricht und der mit der Ausnehmung 10a fluchtet. An seinem freien Ende ist der Quetschlappen 10c T-förmig verbreitert.

Figur 6 zeigt das mit dem Kevlarstrang 11 umlegte Wickelblech 9 so zwischen die abgewinkelten Quetschlappen des Quetschteils 10 eingelegt, daß der zum Kabel gerichtete, freie Strang in der Ausnehmung 10a des Quetschelements liegt. Daraufhin werden die Quetschlappen 10b und 10c in der durch die Pfeile angedeuteten Weise gegen das Wickelblech gedrückt, wodurch die Kevlarbewehrung zwischen dem Wickelblech 9 und dem Quetschteil 10, insbesondere dem Lappen 10c eingeklemmt ist.

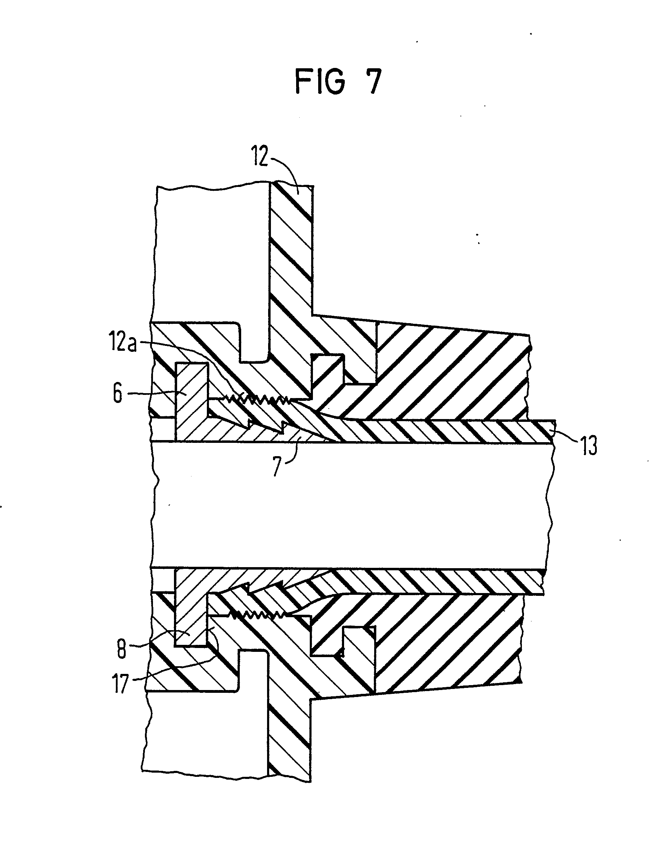

Wie Figur 7 zeigt, steckt eine hohlzylindrische Hülse 6 zwischen einem Endabschnitt des Kabelmantels 13 und der Kevlarbewehrung 11.

Die Aussenfläche der Hülse 6 besitzt als Widerhaken dienende Zähne 7. Der Durchmesser der Hülse ist dabei so bemessen, daß der Kabelmantel 13 elastisch geweitet ist. Er hakt sich daher in den Zähnen 7 fest. So wird ein Abrutschen des Kabelmantels 13 vorteilhaft verhindert. Die Hülse 6 wird zusammen mit dem Kabel quer zur Verlaufsrichtung des Kabels in eine Gehäuseausnehmung 12a eingesetzt, welche ebenfalls eine gezahnte Oberfläche aufweist. Die Ausnehmung 12a ist so bemessen, daß nach dem Einsetzen der Kabelmantel 13 zwischen der Ausnehmung 12a und der Hülse 6 eingeklemmt ist. Um zu verhindern, daß bei Zugbelastung des Kabelmantels 13 dieser zusammen mit der Hülse 6 aus der Ausnehmung 12a gezogen wird, besitzt die Hülse 6 einen Flansch 8, der sich an einer Anlagefläche 17 der Gehäuse 12 abstützt.

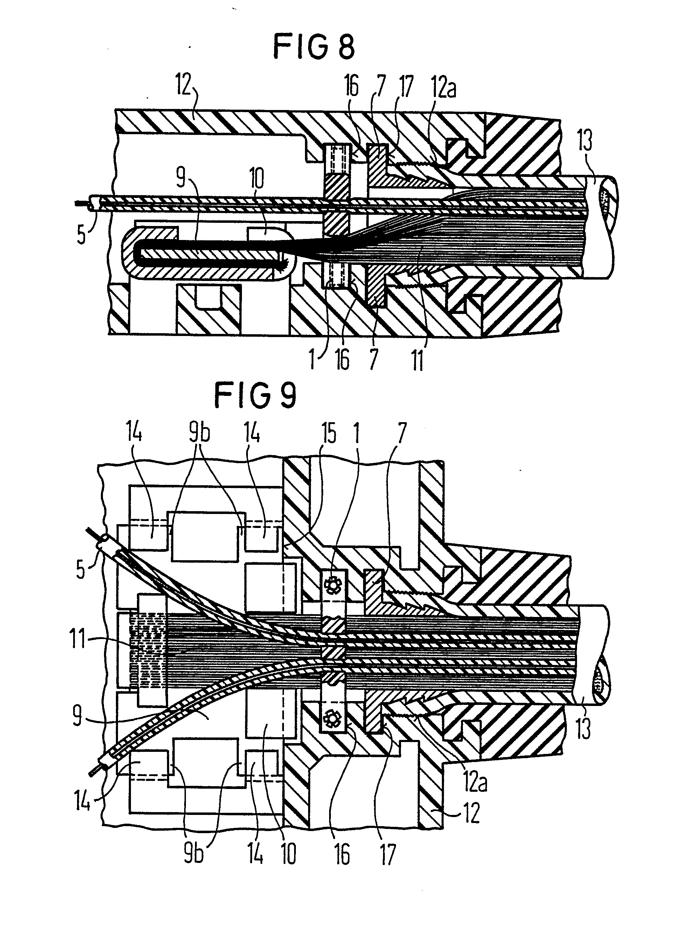

Die Figuren 8 und 9 zeigen, daß das Gehäuse 12 für die Klemmvorrichtung, die Wickel-und Quetschvorrichtung und die hohlzylindrische Hülse jeweils gesonderte Aufnahmekonturen besitzt. Dabei ist zu erkennen, daß die Lappen 9b des Wickelblechs 9 unter Haltenasen 14 des Gehäuses 12 liegen und an eine Anlagefläche 15 des Gehäuses anstoßen. Die aus Wickelblech 9, Quetschelement 10 und der eingeklemmten Kevlarfaser 11 bestehende Einheit, wird dazu so in das Gehäuse 12 eingelegt, daß die Lappen 9b in einem vorgesehenen Freiraum liegen.

Nach Verschieben der Einheit in Pfeilrichtung sitzen die Lappen 9b unter den Haltenasen 14.

## Ansprüche

1. Vorrichtung zum Fixieren von Lichtwellenleiterkabeln in einem Steckergehäuse, welches eine Durchtrittsöffnung zum Hindurchführen von mindestens einem Lichtwellenleiterkabel besitzt, **dadurch gekennzeichnet**, daß in dem Gehäuse (12) voneinander unabhängig jeweils eine Abfangstation für den Lichtwellenleiterkabelmantel, eine Abfangstation für die Kevlarbewehrung, sowie eine Abfangstation für mindestens einen faserförmigen Lichtwellenleiter (5) vorgesehen ist, daß jeweils ein mit dem jeweiligen Kabelelement (Mantel, Kevlarbewehrung, faserförmiger Lichtwellenleiter) verbindbares, gesondert handbares Teil vorgesehen ist und daß in dem Gehäuse (12), das eine parallel zur Lichtwellenleiterrichtung verlaufende Teilungsebene aufweist, Ausnehmungen zum Einfügen dieser Teile, quer zum Verlauf des mindestens einen Lichtwellenleiters vorgesehen sind.

2. Vorrichtung nach Anspruch 1, **dadurch gekennzeichnet**, daß das zur Abfangung der Kevlarbewehrung (11) vorgesehene Teil eine von der Kevlarbewehrung (11) umwickelbare Platte (9) besitzt und daß ein um die umwickelte Platte fügbares Quetschelement (10) vorgesehen ist.

3. Vorrichtung nach Anspruch 1, **dadurch gekennzeichnet**, daß das für den Lichtwellenleitermantel (13) vorgesehene Teil aus einer hohlzylindrischen, unter den Mantel (13) - schiebbaren Hülse (6) besteht und daß die Hülse an dem aus dem Mantel vorstehenden Ende einen Flansch (8) aufweist.

4. Vorrichtung nach Anspruch 3, **dadurch gekennzeichnet**, daß die Außenfläche der Hülse (6) Zähne (7), Rillen oder eine andere, die Gleitfähigkeit einschränkende Struktur aufweist.

5. Vorrichtung nach Anspruch 3, **dadurch gekennzeichnet**, daß ein von der Hülse (6) unterlegter Mantelbereich in eine Gehäuseausnehmumg (12a), mit ähnlicher Oberflächenstruktur, wie die der Hülse (6) eingesetzt wird.

6. Vorrichtung nach Anspruch 1, **dadurch gekennzeichnet**, daß das Teil zum Abfangen für den mindestens einen faserförmigen Lichtwellenleiter aus zwei gleichen Hälften (1) besteht und jede Hälfte einen Quteschbalken (2) mit Aufnahmerillen (2a) zum Einlegen des mindestens einen faserförmigen Lichtwellenleiters (5), eine Bohrung (3) mit diesem Quetschbalken (2) verbundenen, und einen in die Bohrung (3) der jeweils anderen Hälfte in Preßsitz eindrückbaren Stift (4) besitzt.

FIG 1

FIG 2

FIG 3

# FIG 4

# FIG 5

# FIG 6

# FIG 7

# FIG 8

# FIG 9